(19) Europäisches Patentamt
European Patent Office
Office européen des brevets

(11) EP 0 903 358 A1

(12) # EUROPÄISCHE PATENTANMELDUNG

(43) Veröffentlichungstag:
**24.03.1999 Patentblatt 1999/12**

(51) Int. Cl.$^6$: **C08F 290/12**, C08C 19/00, C08C 19/34

(21) Anmeldenummer: **98117530.0**

(22) Anmeldetag: **16.09.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.09.1997 DE 19741497**

(71) Anmelder:
**BASF AKTIENGESELLSCHAFT**
**67056 Ludwigshafen (DE)**

(72) Erfinder:
- **Wünsch, Josef, Dr.**
  **67105 Schifferstadt (DE)**
- **Zeller, Edgar, Dr.**
  **68163 Mannheim (DE)**

(54) **Propfcopolymere**

(57) Pfropfcopolymere, erhältlich durch

a) Umsetzung von vinylaromatischen Verbindungen mit konjugierten Dienen zu Polymeren A), die C=C-Doppelbindungen enthalten,

b) Hydroformylierung von im Polymeren A) enthaltenen C=C-Doppelbindungen in Gegenwart von Kohlenmonoxid, Wasserstoff und einem Hydroformylierungskatalysator zu einem Polymeren B),

c) Isolierung der partiell oder vollständig hydroformylierten Polymeren B),

d) Durchführung einer C-C-Verknüpfungsreaktion an den Formylgruppen des Polym,eren B) unter Einbau einer vinylaromatischen Einheit zu Polymeren C) und

e) Umsetzung des Polymeren C) mit vinylaromatischen Verbindungen in Gegenwart eines Metallocenkatalysatorsystems.

EP 0 903 358 A1

## Beschreibung

Die vorliegende Erfindung betrifft Pfropfcopolymere, erhältlich durch

a) Umsetzung von vinylaromatischen Verbindungen mit konjugierten Dienen zu Polymeren A), die C=C-Doppelbindungen enthalten,

b) Hydroformylierung von im Polieren A) enthaltenen C=C-Doppelbindungen in Gegenwart von Kohlenmonoxid, Wasserstoff und einem Hydroformylierungskatalysator zu einem Polymeren B),

c) Isolierung der partiell oder vollständig hydroformylierten Polymeren B),

d) Durchführung einer C-C-Verknüpfungsreaktion an den Formylgruppen des Polymeren B) unter Einbau einer vinylaromatischen Einheit zu Polymeren C) und

e) Umsetzung des Polymeren C) mit vinylaromatischen Verbindungen in Gegenwart eines Metallocenkatalysatorsystems.

Weiterhin betrifft die Erfindung Verfahren zur Herstellung solcher Pfropfcopolymeren, deren Verwendung zur Herstellung von Fasern, Folien und Formkörpern sowie die daraus erhältlichen Fasern, Folien und Formkörper.
Die Polymerisation von Styrol in Gegenwart von Metallocenkatalysatorsystemen führt zu Polymerisaten mit hoher Stereoregularität und ist z. B. ausführlich in EP-A 0 210 615 beschrieben. Syndiotaktisches Polystyrol besitzt aufgrund seiner Kristallinität einen sehr hohen Schmelzpunkt von ca 270°C, hohe Steifigkeit und Zugfestigkeit, Dimensionsstabilität, eine niedrige Dielektrizitätskonstante und eine hohe Chemikalienbeständigkeit. Das mechanische Eigenschaftsprofil wird selbst bei Temperaturen über der Glastemperatur beibehalten.
Allerdings ist syndiotaktisches Polystyrol spröde.
In der EP-A 559 108 werden Pfropfcopolymere beschrieben, bei denen syndiotaktisches Polystyrol auf ein Polymer mit C=C-Doppelbindungen in der Seitenkette aufgepfropft wird.
Nachteilig hierbei ist jedoch, daß das zu pfropfende Polymere nur statistisch mit Ziegler-Natta-Katalysatoren hergestellt werden kann. Eine radikalische oder ionische Polymerisation gelingt nicht, da die Alkeneinheit, auf die im zweiten Schnitt syndiotaktisches Polystyrol aufgepfropft wird, nur bei der Ziegler-Natta-Katalyse langsamer reagiert als die zweite Alkeneinheit, die zur Herstellung des zu pfropfenden Polymeren genutzt wird.
Die EP-A 490 269 beschreibt ein Verfahren zur Herstellung von Styrol-Pfropfcopolymeren, bei dem ein Styrolmonomer mit einem Styrolmonomer, das einen Kohlenwasserstoffrest mit einer ungesättigten Bindung enthält, copolymerisiert wird und nachfolgender Pfropfpolymerisation mit einem ethylenisch ungesättigten Monomer. Nachteilig bei dieser Pfropfreaktion ist jedoch, daß unlösliches syndiotaktisches Polystyrol radikalisch gepfropft wird. Aufgrund der Unlöslichkeit werden nur sehr niedrige Pfropfgrade erreicht. Zudem kann bei dieser Methode keine effiziente kugelförmige Kautschukmorphologie erzielt werden, da syndiotaktisches Polystyrol den Pfropfkern bildet.
Aufgabe der vorliegenden Erfindung war es daher, Polymere zur Verfügung zu stellen, die die genannten Nachteile nicht aufweisen, die insbesondere eine hohe Steifigkeit, Zugfestigkeit, Dimensionsstabilität und Zähigkeit aufweisen und bei deren Herstellung sowohl radikalisch als auch ionisch hergestellte Pfropfpolymere eingesetzt werden können.
Demgemäß wurden die eingangs definierten Pfropfcopolymeren gefunden.
Weiterhin wurden Verfahren zur Herstellung solcher Pfropfcopolymeren gefunden, deren Verwendung zur Herstellung von Fasern, Folien und Formkörpern sowie die daraus erhältlichen Fasern, Folien und Formkörper.
In der Stufe a) werden vinylaromatische Verbindungen mit konjugierten Dienen zu Polymeren A), die C=C-Doppelbindungen enthalten, umgesetzt.
Als vinylaromatische Verbindungen eignen sich besonders Verbindungen der allgemeinen Formel I

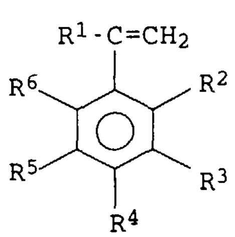

(I)

in der die Substituenten folgende Bedeutung haben:

$R^1$ Wasserstoff oder $C_1$-bis $C_4$-Alkyl,

$R^2$ bis $R^6$ unabhängig voneinander Wasserstoff, $C_1$-bis $C_{12}$-Alkyl, $C_6$-bis $C_{18}$-Aryl, Halogen oder wobei zwei benachbarte Reste gemeinsam für 4 bis 15 C-Atome aufweisende cyclische Gruppen stehen.

Bevorzugt werden vinylaromatische Verbindungen der Formel I eingesetzt, in denen

$R^1$ Wasserstoff bedeutet.

Als Substituenten $R^2$ bis $R^6$ kommen insbesondere Wasserstoff, $C_1$- bis $C_4$-Alkyl, Chlor oder Phenyl, Biphenyl, Naphthalin oder Anthracen in Betracht. Zwei benachbarte Reste können auch gemeinsam für 4 bis 12 C-Atome aufweisende cyclische Gruppen stehen, so daß sich als Verbindungen der allgemeinen Formel I beispielsweise Naphthalinderivate oder Anthracenderivate ergeben.

Beispiele für solche bevorzugten Verbindungen sind:

Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, wobei eine Komponente auch weitere Kohlenwasserstoffreste wie Vinylgruppen, Allylgruppen, Methallylgruppen, Butenyl- oder Pentenylgruppen, vorzugsweise Vinylgruppen am Phenylring tragen kann. Weitere vinylaromatische Verbindungen wie 1,1-Diphenylethylen können ebenfalls eingesetzt werden. Vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel I ist an sich bekannt und beispielsweise in Beilstein 5, 367, 474, 485 beschrieben.

Als konjugierte Diene eignen sich beispielsweise Butadien, Isopren, Dimethylbutadien und Phenylbutadien. Bevorzugt ist Butadien.

Die Umsetzung von vinylaromatischen Verbindungen mit konjugierten Dienen ist bekannt und beispielsweise in H.L. Hsieh, R.P. Quirk, Anionic Polymerization, Dekker, 1996, beschrieben. Die Herstellung der Polymeren A) kann durch anionische, kationische oder radikalische Polymerisation in Lösung, in Substanz, in Suspension oder in Emulsion durchgeführt werden. Gegebenenfalls können noch untergeordnete Mengen an weiteren Monomeren, wie Olefine, einpolymerisiert werden.

Das Polymere A) enthält vorzugsweise 3 bis 97 Gew.-% vinylaromatische Verbindungen, insbesondere 5 bis 95 Gew.-% und 97 bis 3 Gew.-% an konjugierten Dienen, insbesondere 95 bis 5 Gew.-%.

In Stufe b) wird nun das Polymere A) einer Hydroformylierung in Gegenwart von Kohlenmonoxid, Wasserstoff und einem Hydroformylierungskatalysator unterworfen, sodaß ein Polymer B) entsteht.

Hydroformylierungen sind ebenfalls bekannt und beispielsweise in Ch. Eschenbroich/A. Salzer, Organometallchemie, Teubner, 1988, beschrieben. Das Polymere A) kann in Lösung, in gequollenem Zustand oder als Schmelze eingesetzt werden. Als Lösungsmittel eignen sich inerte organische Lösungsmittel wie gesättigte und aromatische Kohlenwasserstoffe, beispielsweise Hexan, Octan, Dodecan, Decalin, Cyclohexan, Cycloheptan, Benzol, Toluol, Xylol, Ether, Sulfone oder deren Mischungen.

Als Hydroformylierungskatalysatoren eignen sich alle bekannten Hydroformylierungskatalysatoren, insbesondere solche der VIII. Nebengruppe des Periodensystems der Elemente, vorzugsweise Verbindungen von Rhodium, Cobalt und Palladium. Bevorzugt werden Salze wie Hydride, Halogenide, Nitrate, Sulfate, Oxide oder Sulfide sowie Komplexe mit Carbonylen, Aminen, Triarylphosphinen oder Trialkylphosphinen, aber auch mit Carboxylaten oder Acetylacetonat. Beispiele hierfür sowie Verfahren zur Herstellung sind beispielsweise in der US-A 4,914,157 beschrieben.

Bevorzugt werden $Rh(CO)_2acac$ (≙ Acetylacetonat) und $Co_2(CO)_8$ eingesetzt.

Die Menge an Katalysator beträgt üblicherweise 0,01 bis 2,0 Gew.-%, bezogen auf das Polymere A).

Die Hydroformylierung kann in einem weiten Temperaturbereich durchgeführt werden, üblicherweise arbeitet man bei Temperaturen im Bereich von 20 bis 200°C. Als Drücke haben sich 1 bis 1000 bar als geeignet erwiesen, insbesondere 10 bis 600 bar, je nach Wahl des Katalysators.

Das molare Verhältnis von Kohlenmonoxid zu Wasserstoff kann in weiten Bereichen schwanken, vorzugsweise liegt es im Bereich von 0,2:1 bis 5:1, insbesondere 0,5:1 bis 2:1.

Bei der Hydroformylierung wird formal eine Formylgruppe und ein Wasserstoffatom an eine olefinische Doppelbindung des Polymeren A) addiert. Schematisch würde das bei einem Styrol-Butadien-Styrol-Blockcopolymeren A) so aussehen:

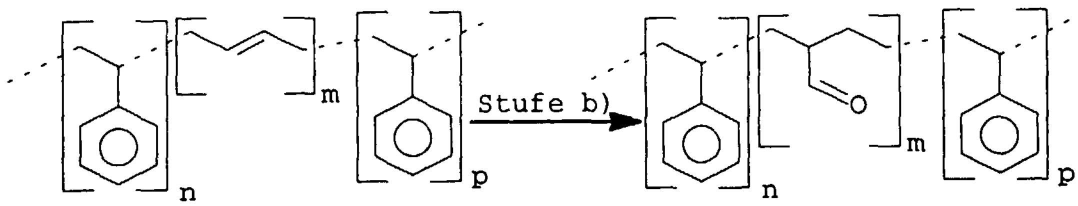


Polymer A) Polymer B)

Das Polymer B), das partiell oder vollständig hydroformyliert sein kann, wird dann in einer Stufe c) isoliert. Diese Abtrennung von Katalysator kann beispielsweise durch (wiederholtes)Ausfällen des Polymeren B) aus seiner Lösung in einem unpolaren Lösungsmittel, z.B. Toluol, durch Zugabe eines polaren Lösungsmittels, z.B. Methanol, bis zur gewünschten Reinheit erfolgen.

Die Abtrennung von Cobalt-Katalysatoren von hydroformylierten Polymeren ist beispielsweise in der US-A 3,513,130 beschrieben.

In Stufe d) wird eine C-C-Verknüpfungsreaktion an den Formylgruppen des Polymeren B) unter Einbau einer vinylaromatischen Einheit durchgeführt, so daß ein Polymer C) entsteht.

Vorzugsweise wird diese Reaktion als Wittig-Reaktion durchgeführt. Diese Reaktionen sind an sich bekannt und beispielsweise in Advanced Organic Chemistry, 1985, Kapitel 6-47, S. 845 - 854 beschrieben. Üblicherweise setzt man Phosphorylide ein.

Die Herstellung von Wittig-Salzen ist beispielsweise in J. Org. Chem. 54, 1989, S. 4808 - 4812 (Katritzky et al.) beschrieben. Hierbei setzt man üblicherweise die entsprechenden Alkylhalogenide, bevorzugt Bromide, mit Triphenylphosphin um.

Bevorzugt sind Bromalkylstyrole, besonders bevorzugt p-Brommethylstyrol. Vorzugsweise wird Triphenylphosphin und das Bromid in einem Autoklaven unter Druck erhitzt, wobei Triphenylphosphinbromid direkt anfällt.

Schematisiert würde das - um bei dem oben aufgeführten Schema zu bleiben - zu einem Polymeren C) der folgenden Struktur führen:

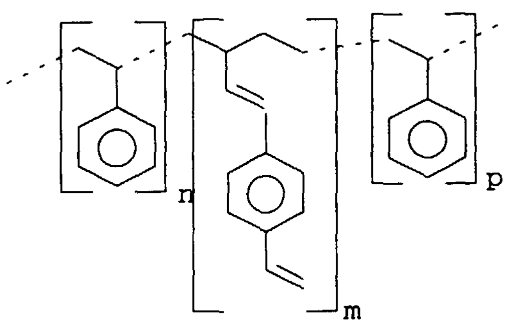

Polymer C)

In Stufe e) wird nun das Polymere C) mit vinylaromatischen Verbindungen in Gegenwart eines Metallocenkatalysatorsystems umgesetzt.

Als vinylaromatische Verbindungen eignen sich auch hier insbesondere Verbindungen der allgemeinen Formel I, sodaß auf das dort Gesagte verwiesen wird (Stufe a))

Als Metallocenkatalysatorsysteme eignen sich besonders solche, die erhältlich sind aus einem Metallocenkomplex, einer metalloceniumionenbildenden Verbindung und ggf. einer Aluminiumverbindung.

Bevorzugt werden als Metallocenkomplexe solche der allgemeinen Formel II eingesetzt:

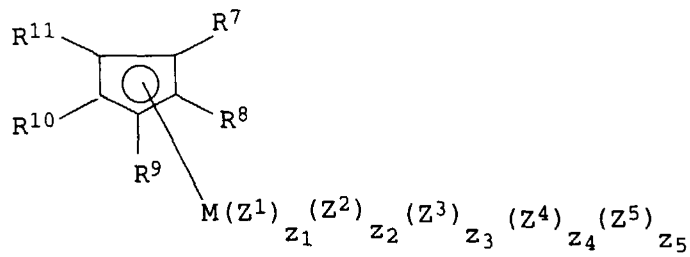

(II),

in der die Substituenten und Indices folgende Bedeutung haben:

$R^7$ bis $R^{11}$ Wasserstoff, $C_1$- bis $C_{10}$-Alkyl, 5- bis 7-gliedriges Cycloalkyl, das seinerseits $C_1$- bis $C_6$-Alkylgruppen als Substituenten tragen kann, $C_6$- bis $C_{15}$-Aryl oder Arylalkyl und wobei gegebenenfalls auch zwei benachbarte Reste gemeinsam für 4 bis 15 C-Atome aufweisende cyclische Gruppen, beispielsweise für anellierte Ringsysteme stehen können, oder $Si(R^{12})_3$,

mit $R^{12}$ $C_1$- bis $C_{10}$-Alkyl, $C_6$- bis $C_{15}$-Aryl oder $C_3$- bis $C_{10}$-Cycloalkyl,

M ein Metall der III. bis VI. Nebengruppe des Periodensystems der Elemente oder ein Metall der Lanthanidenreihe

$Z^1$ bis $Z^5$ Wasserstoff, Halogen, $C_1$- bis $C_{10}$-Alkyl, $C_6$- bis $C_{15}$-Aryl, $C_1$- bis $C_{10}$-Alkoxy oder $C_1$- bis $C_{15}$-Aryloxy und

$z_1$ bis $z_5$ 0, 1, 2, 3, 4 oder 5, wobei die Summe $z_1+z_2+z_3+z_4+z_5$ der Wertigkeit von M abzüglich der Zahl 1 entspricht,

Besonders bevorzugte Metallocenkomplexe der allgemeinen Formel II sind solche, in denen

M für ein Metall der IV. Nebengruppe des Periodensystems der Elemente steht, also für Titan, Zirkonium oder Hafnium, insbesondere für Titan
und

$Z^1$ bis $Z^5$ $C_1$- bis $C_{10}$-Alkyl, $C_1$- bis $C_{10}$-Alkoxy oder Halogen bedeuten.

Beispiele für solche bevorzugten Metallocenkomplexe sind:

Pentamethylcyclopentadienyltitantrichlorid,
Pentamethylcyclopentadienyltitantrimethyl und
Pentamethylcyclopentadienyltitantrimethylat.

Es können auch solche Metallocenkomplexe, wie in der EP-A 584 646 beschrieben, eingesetzt werden.
Mischungen verschiedener Metallocenkomplexe können auch verwendet werden.
Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.
Beispiele für entsprechende Herstellungsverfahren sind u.a. im Journal of Organometallic Chemistry, 369 (1989), 359-370 beschrieben.
Als metalloceniumionenbildende Verbindung können die Katalysatorsysteme offenkettige oder cyclische Alumoxanverbindungen enthalten.
Geeignet sind beispielsweise offenkettige oder cyclische Alumoxanverbindungen der allgemeinen Formel III oder IV

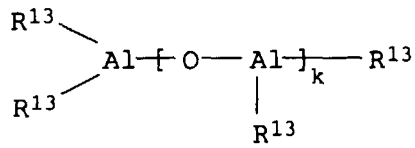 (III)

oder 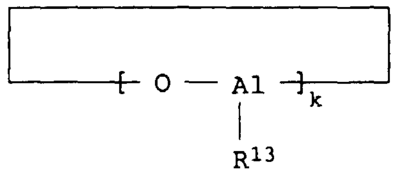 (IV),

wobei

$R^{13}$ eine $C_1$- bis $C_4$-Alkylgruppe bedeutet, bevorzugt Methyl- oder Ethylgruppe und k für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß k als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis $10^4$:1, insbesondere im Bereich von 20:1 bis 9000:1, liegt.

Als metalloceniumionenbildende Verbindungen können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.

Als starke neutrale Lewissäuren sind Verbindungen der allgemeinen Formel V

$$M^1X^1X^2X^3 \qquad (V)$$

bevorzugt, in der

$M^1$ ein Element der III. Hauptgruppe des Periodensystems bedeutet, insbesondere B, Al oder Ga, vorzugsweise B,

$X^1$,$X^2$ und $X^3$ für Wasserstoff, $C_1$- bis $C_{10}$-Alkyl, $C_6$- bis $C_{15}$-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel VI, in der $X^1$, $X^2$ und $X^3$ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissauren Kationen sind Verbindungen der allgemeinen Formel VI

$$[(Y^{a+})Q_1Q_2...Q_z]^{d+} \qquad (VI)$$

geeignet, in denen

**Y** ein Element der I. bis VI. Hauptgruppe oder der I. bis VIII. Nebengruppe des Periodensystems bedeutet,

$Q_1$ bis $Q_z$ für einfach negativ geladene Reste wie $C_1$- bis $C_{28}$-Alkyl, $C_6$- bis $C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_1$- bis $C_{10}$-

Cycloalkyl, welches gegebenenfalls mit $C_1$- bis $C_{10}$-Alkylgruppen substituiert sein kann, Halogen, $C_1$- bis $C_{28}$-Alkoxy, $C_6$- bis $C_{15}$-Aryloxy oder Silyl- oder Mercaptylgruppen, wie Trimethylsilyl.

a für ganze Zahlen von 1 bis 6 steht,

z für ganze Zahlen von 0 bis 5

d der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.

Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Weiterhin können die Metallocenkatalysatorsystem eine Aluminiumverbindung enthalten. Diese kann z.B. durch die allgemeine Formel VII

$$AlR^{14}R^{15}R^{16} \qquad (VII),$$

in der

$R^{14}$ bis $R^{16}$ für Wasserstoff, Fluor, Chlor, Brom, Jod oder $C_1$- bis $C_{12}$-Alkyl stehen, bevorzugt für $C_1$- bis $C_8$-Alkyl,

charakterisiert werden.

Vorzugsweise sind die Reste $R^{14}$ bis $R^{15}$ gleich und stehen für $C_1$-$C_6$-Alkyl wie Methyl, Ethyl, Isobutyl oder n-Hexyl, $R^{16}$ bedeutet vorzugsweise Wasserstoff.

Bevorzugt ist diese Komponente in einer Menge von 1 : 2000 bis 1 : 1, insbesondere 1 : 800 bis 1 : 10 (molares Verhältnis Übergangsmetall aus II zu Al aus VII) im Katalysatorsystem enthalten.

Als Lösungsmittel für die Metallocenkomplexe und die Alumoxanverbindungen werden üblicherweise aromatische Kohlenwasserstoffe eingesetzt, bevorzugt mit 6 bis 20 C-Atomen, insbesondere Xylole, Toluol und Ethylbenzol sowie deren Mischungen. Die Aluminiumverbindungen VII können in unpolaren aliphatischen oder aromatischen Solventien wie Ethylbenzol oder Cyclohexan gelöst sein.

Die Metallocenkomplexe können ungeträgert oder geträgert eingesetzt werden.

Geeignete Trägermaterialien sind beispielsweise Kieselgele, bevorzugt solche der Formel $SiO_2 \cdot bAl_2O_3$, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.

Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylalkohol, Polystyrol, syndiotaktisches Polystyrol, Polybutadien, Polycarbonate oder deren Copolymere.

Das Molverhältnis von Metallocenkomplex II zu vinylaromatischem Monomer beträgt im allgemeinen 1 : 1000 bis 1 : 10 000 000, bevorzugt jedoch 1 : 2000 bis 1 : 1 000 000.

Das Molverhältnis von vinylaromatischer Verbindung zu dem Polymeren C) liegt vorzugsweise im Bereich von $10^8$:1 bis 1:1, insbesondere von $10^7$:1 bis 10:1.

Die Umsetzung kann bei Temperaturen im Bereich von -78°C bis +150°C, bevorzugt von 0°C bis 120°C durchgeführt werden. Es ist auch möglich, einen Temperaturgradienten von beispielsweise 0°C bis 120°C mit der Reaktionszeit anzulegen.

Vorzugsweise polymerisiert man in der vinylaromatischen Verbindung als Reaktionsmedium, d.h. in Masse. Aber auch Polymerisation in Lösung, Suspension oder Gasphase ist möglich.

Es hat sich als besonders geeignet erwiesen, wenn man die vinylaromatische Verbindung und das Polymere C) vorlegt, dann mit der metalloceniumionenbildenden Verbindung und der Aluminiumverbindung (VII) versetzt, dann den Metallocenkomplex (II) zugibt und 0,1 bis 10 Stunden, vorzugsweise 0,5 bis 5 Stunden polymerisiert. Die Polymerisation kann durch Zugabe von protischen Verbindungen, beispielsweise Methanol, abgebrochen werden.

Im bevorzugten Fall, der Umsetzung mit Styrol, pfropft man auf das Polymere C) syndiotaktisches Polystyrol auf.

Man kann sowohl kontinuierlich als auch diskontinuierlich arbeiten. An die Reaktoren werden keine bestimmte Erfordernisse gestellt, man kann beispielsweise in Rührreaktoren, Autoklaven, Kneten, Extruden oder vertikalen Reaktoren arbeiten.

Die erfindungsgemäßen Pfropfcopolymere zeichnen sich durch hohe Steifigkeit, Zugfestigkeit, Dimensionsstabilität und Zähigkeit, insbesondere Schlagzähigkeit aus. Sie eignen sich zur Herstellung von Fasern, Folien und Formkörpern. Bei der Herstellung der erfindungsgemäßen Pfropfcopolymere können sowohl radikalisch als auch ionisch hergestellte Pfropfpolymere eingesetzt werden. Weiterhin wird syndiotaktisches Polystyrol auf löslichen Kautschuk aufgepfropft, wobei sich über das eingesetzte Pfropfpolymer kugelförmige und lamellare Kautschukmorphologien einstellen lassen.

Beispiele:

Beispiele 1 bis 3: Hydroformylierungen

Beispiel 1: Hydroformylierung eines S/B-Copolymers mit Rhodium

Eine Lösung von Styrolux KR 2691® [symmetrisches Styrol-Butadien-Styrol-Triblock-Copolymer, Molmasse Mn ca. 91000, Butadiengehalt ca. 26 Gew.-%, 1,2-Vinylgehalt ca. 9 %] in Toluol wurde durch Auflösen von 100 g Polymer in 900 g Toluol bereitet; die Lösung wurde durch Einleiten von Argon von Luft befreit. In einem Schlenkrohr wurde eine Lösung von 0.02 g $Rh(CO)_2$ acac (0,08 mmol) in 5 ml Toluol bereitet und die entstehende Lösung durch Einleiten von Argon entgast. Die beiden Lösungen wurden gemischt und in einen stickstoffgefüllten 2000 ml Autoklaven mit Rührer gefüllt. Der Autoklav wurde auf 150°C erhitzt und dabei durch Einleiten eines Kohlenmonoxid-Wasserstoff-Gemisches (molares Verhältnis 1:1) der Druck auf 280 bar erhöht. Durch die eintretende Reaktion fiel der Gasdruck während der Reaktion ab und wurde durch wiederholtes weiteres Einleiten des Kohlenmonoxid/Wasserstoff-Gemisches (1:1) aufrechterhalten. Nach 5 h wurde die Heizung und Gaszufuhr abgestellt, der Autoklav abgekühlt und über ein Steigrohr in ein Argon-gefülltes Vorratsgefäß entleert. Ein Teil des Toluols (50 %) wurde mit einem Rotationsverdampfer im Vakuum entfernt und das Produkt anschließend in Methanol (2000 ml) getropft, wobei das hydroformylierte Polymer ausfiel. Durch IR-Spektroskopie konnte eindeutig die Bildung von Aldehydgruppen nachgewiesen werden. Durch analytische Kennzahlen konnte der Grad der Umsetzung an olefinischen Doppelbindungen und der Gehalt an Aldehydgruppen im hydroformylierten Polymer bestimmt werden: Das eingesetzte Polymer besaß vor der Hydroformylierung eine Jodzahl nach DIN 53241 von 118 g Iod/100 g Polymer, nach der Hydroformylierung wurde 13 g Iod/100 g Polymer bestimmt. Die Carbonylzahl nach DIN 51558 war vor der Hydroformylierung kleiner als 1 mg KOH/g Polymer, nach der Hydroformylierung betrug sie 180 mg KOH/g.

Beispiel 2: Hydroformylierung eines S/B-Copolymers mit Rhodium

Beispiel 1 wurde wiederholt, jedoch wurde die Hydroformylierung mit nur 0,005 g $Rh(CO)_2$acac (0,02 mmol) durchgeführt, außerdem wurde die Umsetzung nach 1 h abgebrochen und das hydroformylierte Polymer analog aufgearbeitet. Analytische Kennzahlen des Produktes: Jodzahl 105 g Iod/100 g Polymer, CO-Zahl 20 mg KOH/g Polymer.

Beispiel 3: Cobalt-katalysierte Hydroformylierung eines S/B-Copolymers

Beispiel 1 wurde wiederholt, jedoch wurde anstelle des Rhodium-Hydroformylierungskatalysators das Cobaltcarbonyl $Co_2(CO)_8$ (0,4 g, 2,2 mmol) eingesetzt. Die Umsetzung erfolgte bei 180°C und 280 bar. Die Reaktionszeit betrug 2 h. Zur Verringerung von Acetalbildungen wurde der toluolischen Lösung des Polymeren 100 g Wasser zugesetzt. Nach der Hydroformylierung wurde die Cobalthaltige Lösung des hydroformylierten Polymers mit 10 %iger Essigsäure (ca. 400 ml) versetzt und in einem Glaskolben unter Lufteinleitung und unter Rühren bei ca. 70°C gerührt. Ein Farbwechsel nach schwachrosa zeigte die erfolgte Oxidation des Cobaltcarbonyls an. Der Rührer und die Heizung wurde abgeschaltet, damit sich die polymerhaltige Toluolphase von der Wasser/Essigsäurephase trennen konnte. Diese Phase wurde abgetrennt und die polymerhaltige Phase nochmals mit Wasser neutral gewaschen. Nach dem Abziehen des Toluols verblieb ein farbloses Produkt mit folgenden analytischen Kennzahlen: Jodzahl 40 g Iod/100 g Polymer, Carbonylzahl 120 mg KOH/g.

Beispiel 4: Wittig-Salz Darstellung

Pyridin und p-Chlor-Methylstyrol wurden analog Tropsch Bull Soc. Chim. Belg, 1987, 96, S. 719 zum N-(1-Chlor-p-styrolmethylen)pyridiniumchlorid umgesetzt. 50 mmol dieser Verbindung wurden in trockenem Chloroform (300 ml) gelöst und dazu gab man 50 mmol von Triphenylphosphin bei 0°C. Nach 1 h behandelte man die Mischung mit Diethylether (ca. 600 ml) und extrahierte mehrmals (4-5 Mal). Das N-[(Triphenylphosphonio)(4-vinylphenyl)methyl]pydridiniumdichlorid wurde in 87 % Ausbeute isoliert und zeigte nach Umkristallisation einen Schmelzbereich von 186 - 187°C.

Beispiele 5 bis 7: Durchführung einer C-C-Verknüpfungsreaktion

Beispiel 5: Wittig-Reaktion mit Polymer Bsp. 1

Es wurden 100 mmol des Wittig-Salzes aus Bsp. 4 in 400 ml Ethanol gelöst und 10 g des Polymeren aus Bsp. 1 zugegeben. Bei Raumtemperatur wurden 30 ml einer 1 M Natriumethylat-Lösung zugetropft, wobei die Temperatur nicht über 30°C stieg. Man rührte 4 Stunden und fällte das Polymer durch Zugabe von Wasser.

Jodzahl vor Wittigreaktion: 13 g Iod/100 g Polymer
Jodzahl nach Wittigreaktion: 221 g Iod/100 g Polymer
(Produkt: Polymer Bsp. 5)

Beispiel 6: Wittig-Reaktion mit Polymer Bsp. 2

Es wurden 60 mmol des Wittig-Salzes aus Bsp. 4 in 400 ml Ethanol gelöst und 10 g des Polymeren aus Bsp. 2 zugegeben. Bei Raumtemperatur wurden 30 ml einer 1 M Natriumethylat-Lösung zugetropft, wobei die Temperatur nicht über 30°C stieg. Man rührte 4 Stunden und fällte das Polymer durch Zugabe von Wasser.

Jodzahl vor Wittigreaktion: 105 g Iod/100 g Polymer
Jodzahl nach Wittigreaktion: 129 g Iod/100 g Polymer
(Produkt: Polymer Bsp. 6)

Beispiel 7: Wittig-Reaktion mit Polymer Bsp. 3

Es wurden 75 mmol des Wittig-Salzes aus Bsp. 4 in 400 ml Ethanol gelöst und 10 g des Polymeren aus Bsp. 3 zugegeben. Bei Raumtemperatur wurden 30 ml einer 1 M Natriumethylat-Lösung zugetropft, wobei die Temperatur nicht über 30°C stieg. Man rührte 4 Stunden und fällte das Polymer durch Zugabe von Wasser.

Jodzahl vor Wittigreaktion: 40 g Iod/100 g Polymer
Jodzahl nach Wittigreaktion: 178 g Iod/100 g Polymer
(Produkt: Polymer Bsp. 7)

Beispiele 8 bis 10: Umsetzung mit Styrol

Beispiel 8:

In einem mit Stickstoff inertisierten Rundkolben wurden 1.0 mol Styrol (104.2 g) und 15 g des Polymeren aus Bsp. 5 vorgelegt, die Mischung auf 60°C erwärmt und mit 8,16 ml Methylaluminoxan (MAO) der Fa. Witco (1.53 M in Toluol) und 2,08 ml Diisobutylaluminiumhydrid DIBAH (1,0 M in Cyclohexan) der Fa. Aldrich versetzt. Anschließend versetzte man die Mischung mit 9.5 mg ($4.16 \cdot 10^{-5}$ mol) an Cp*$TiMe_3$ (Pentamethylcyclopentadienyltitaniumtrimethyl). Die Innentemperatur wurde auf 60°C einreguliert und man ließ 2 h polymerisieren. Das entstehende Polymer fiel bereits nach 10 min Reaktionszeit aus und die Mischung wurde inhomogen. Nach 2 h wurde die Polymerisation durch Zugabe von Methanol abgebrochen. Das erhaltene Polymere wurde mit Methanol gewaschen und bei 50°C im Vakuum getrocknet. Die Molmassen und deren Verteilung wurde durch Hochtemperatur-GPC mit 1,2,4-Trichlorbenzol als Lösungsmittel bei 135°C bestimmt. Die Kalibrierung erfolgte mit engverteilten Polystyrolstandards. Die Molmasse betrug Mw = 467 300 mit einer Verteilungsbreite von Mw/Mn = 2.6. Der syndiotaktische Anteil bestimmt nach $^{13}$C-NMR war > 90 %. Der Umsatz betrug 86 % bezogen auf das eingesetzte Monomer Styrol.
Die Schlagzähigkeit an spritzgegossenen Prüfkörpern nach DIN 53453-n betrug 38 KJ/m$^2$, die Bruchspannung 28,2 MPa (DIN 53455) und die Bruchdehnung (DIN 53455) 2,7 %.

Beispiel 9:

In einem mit Stickstoff inertisierten Rundkolben wurden 1.0 mol Styrol (104.2 g) und 15 g des Polymeren aus Bsp. 6 vorgelegt, die Mischung auf 60°C erwärmt und mit 8,16 ml Methylaluminoxan (MAO) der Fa. Witco (1.53 M in Toluol) und 2,08 ml Diisobutylaluminiumhydrid DIBAH (1,0 M in Cyclohexan) der Fa. Aldrich versetzt. Anschließend versetzte man die Mischung mit 9.5 mg ($4.16*10^{-5}$ mol) an $Cp^*TiMe_3$ (Pentamethylcyclopentadienyltitaniumtrimethyl). Die Innentemperatur wurde auf 60°C einreguliert und man ließ 2 h polymerisieren. Das entstehende Polymer fiel bereits nach 10 min Reaktionszeit aus und die Mischung wurde inhomogen. Nach 2 h wurde die Polymerisation durch Zugabe von Methanol abgebrochen. Das erhaltene Polymere wurde mit Methanol gewaschen und bei 50°C im Vakuum getrocknet. Die Molmassen und deren Verteilung wurde durch Hochtemperatur-GPC mit 1,2,4-Trichlorbenzol als Lösungsmittel bei 135°C bestimmt. Die Kalibrierung erfolgte mit engverteilten Polystyrolstandards. Die Molmasse betrug Mw = 212 700 mit einer Verteilungsbreite von Mw/Mn= 2.4. Der syndiotaktische Anteil bestimmt nach $^{13}C$-NMR war > 90 %. Der Umsatz betrug 54 % bezogen auf das eingesetzte Monomer Styrol.
Die Schlagzähigkeit an spritzgegossenen Prüfkörpern nach DIN 53453-n betrug 17 $KJ/m^2$, die Bruchspannung 34,4 MPa (DIN 53455) und die Bruchdehnung (DIN 53455) 2,1 %.

Beispiel 10:

In einem mit Stickstoff inertisierten Rundkolben wurden 1.0 mol Styrol (104.2 g) und 15 g des Polymeren aus Bsp. 7 vorgelegt, die Mischung auf 60°C erwärmt und mit 8,16 ml Methylaluminoxan (MAO) der Fa. Witco (1.53 M in Toluol) und 2,08 ml Diisobutylaluminiumhydrid DIBAH (1,0 M in Cyclohexan) der Fa. Aldrich versetzt. Anschließend versetzte man die Mischung mit 9.5 mg ($4.16*10^{-5}$ mol) an $Cp^*TiMe_3$. Die Innentemperatur wurde auf 60°C einreguliert und man ließ 2 h polymerisieren. Das entstehende Polymer fiel bereits nach 10 min Reaktionszeit aus und die Mischung wurde inhomogen. Nach 2 h wurde die Polymerisation durch Zugabe von Methanol abgebrochen. Das erhaltene Polymere wurde mit Methanol gewaschen und bei 50°C im Vakuum getrocknet. Die Molmassen und deren Verteilung wurde durch Hochtemperatur-GPC mit 1,2,4-Trichlorbenzol als Lösungsmittel bei 135°C bestimmt. Die Kalibrierung erfolgte mit engverteilten Polystyrolstandards. Die Molmasse betrug Mw = 243 800 mit einer Verteilungsbreite von Mw/Mn= 2.3. Der syndiotaktische Anteil bestimmt nach $^{13}C$-NMR war > 90 %. Der Umsatz betrug 71 % bezogen auf das eingesetzte Monomer Styrol. Die Schlagzähigkeit an spritzgegossenen Prüfkörpern nach DIN 53453-n betrug 26 $KJ/m^2$, die Bruchspannung 32,1 MPa (DIN 53455) und die Bruchdehnung (DIN 53455) 2,2 %.

Vergleichsbeispiele 11 und 12:

Vergleichsbeispiel 11:

In einem mit Stickstoff inertisierten Rundkolben wurden 1.0 mol Styrol (104.2 g) vorgelegt, die Mischung auf 60°C erwärmt und mit 8,16 ml Methylaluminoxan (MAO) der Fa. Witco (1.53 M in Toluol) und 2,08 ml Diisobutylaluminiumhydrid DIBAH (1,0 M in Cyclohexan) der Fa. Aldrich versetzt. Anschließend versetzte man die Mischung mit 9.5 mg ($4.16*10^{-5}$ mol) an $Cp^*TiMe_3$. Die Innentemperatur wurde auf 60°C einreguliert und man ließ 2 h polymerisieren. Das entstehende Polymer fiel bereits nach 10 min Reaktionszeit aus und die Mischung wurde inhomogen. Nach 2 h wurde die Polymerisation durch Zugabe von Methanol abgebrochen. Das erhaltene Polymere wurde mit Methanol gewaschen und bei 50°C im Vakuum getrocknet. Die Molmassen und deren Verteilung wurde durch Hochtemperatur-GPC mit 1,2,4-Trichlorbenzol als Lösungsmittel bei 135°C bestimmt. Die Kalibrierung erfolgte mit engverteilten Polystyrolstandards. Die Molmasse betrug Mw = 320 800 mit einer Verteilungsbreite von Mw/Mn= 2.1. Der syndiotaktische Anteil bestimmt nach $^{13}C$-NMR war > 90 %. Der Umsatz betrug 73 % bezogen auf das eingesetzte Monomer Styrol.
Die Schlagzähigkeit an spritzgegossenen Prüfkörpern nach DIN 53453-n betrug 2 $KJ/m^2$, die Bruchspannung 48,7 MPa (DIN 53455) und die Bruchdehnung (DIN 53455) 1,4 %.

Vergleichsbeispiel 12:

Reines syndiotaktisches Polystyrol (100 g) aus Vergleichsbeispiel 11 wurde in einem Kneter der Fa. Haake (Rheomix) bei 290°C 5 min lang mit 15 g des Polymeren aus Bsp. 7 geknetet und der erhaltene Blend untersucht. Die Schlagzähigkeit an spritzgegossenen Prüfkörpern nach DIN 53453-n betrug 3 $KJ/m^2$, die Bruchspannung 47,5 MPa (DIN 53455) und die Bruchdehnung (DIN 53455) 1,2 %.

## Patentansprüche

**1.** Pfropfcopolymere, erhältlich durch

a) Umsetzung von vinylaromatischen Verbindungen mit konjugierten Dienen zu Polymeren A), die C=C-Doppelbindungen enthalten,

b) Hydroformylierung von im Polymeren A) enthaltenen C=C-Doppelbindungen in Gegenwart von Kohlenmonoxid, Wasserstoff und einem Hydroformylierungskatalysator zu einem Polymeren B),

c) Isolierung der partiell oder vollständig hydroformylierten Polymeren B),

d) Durchführung einer C-C-Verknüpfungsreaktion an den Formylgruppen des Polymeren B) unter Einbau einer vinylaromatischen Einheit zu Polymeren C) und

e) Umsetzung des Polymeren C) mit vinylaromatischen Verbindungen in Gegenwart eines Metallocenkatalysatorsystems.

2. Pfropfcopolymere nach Anspruch 1, dadurch gekennzeichnet, daß man als vinylaromatische Verbindungen in Stufe a) und Stufe e) Verbindungen der allgemeinen Formel I

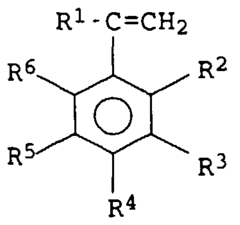

(I)

einsetzt, in der die Substituenten folgende Bedeutung haben:

| | |
|---|---|
| $R^1$ | Wasserstoff oder $C_1$-bis $C_4$-Alkyl, |
| $R^2$ bis $R^6$ | unabhängig voneinander Wasserstoff, $C_1$-bis $C_{12}$-Alkyl, $C_6$-bis $C_{18}$-Aryl, Halogen oder wobei zwei benachbarte Reste gemeinsam für 4 bis 15 C-Atome aufweisende cyclische Gruppen stehen. |

3. Pfropfcopolymere nach den Ansprüchen 1 bis 2, dadurch gekennzeichnet, daß die Stufe d) als Wittig-Reaktion durchgeführt wird.

4. Pfropfcopolymere nach den Ansprüchen 1 bis 3, dadurch gekennzeichnet, daß man als Metallocenkatalysatorsysteme in Stufe e) solche einsetzt, die erhältlich sind aus einem Metallocenkomplex, einer metalloceniumionenbildenden Verbindung und ggf. einer Aluminiumverbindung.

5. Verfahren zur Herstellung von Pfropfcopolymeren gemäß den Verfahrensbedingungen von Anspruch 1.

6. Verwendung von Pfropfcopolymeren gemäß den Ansprüchen 1 bis 4 zur Herstellung von Fasern, Folien und Formkörpern.

7. Fasern, Folien und Formkörper, erhältlich aus den Pfropfcopolymeren gemäß den Ansprüchen 1 bis 4 als wesentliche Komponente.

Europäisches Patentamt

# EUROPÄISCHER RECHERCHENBERICHT

Nummer der Anmeldung
EP 98 11 7530

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 914 157 A (WIDEMAN LAWSON G ET AL) 3. April 1990<br>* Beispiel 1 *<br>----- | 1 | C08F290/12<br>C08C19/00<br>C08C19/34 |
| | | | **RECHERCHIERTE SACHGEBIETE (Int.Cl.6)** |
| | | | C08F<br>C08C |

Der vorliegende Recherchenbericht wurde für alle Patentansprüche erstellt

| Recherchenort | Abschlußdatum der Recherche | Prüfer |
|---|---|---|
| DEN HAAG | 18. Dezember 1998 | Friederich, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 98 11 7530

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-12-1998

| Im Recherchenbericht angeführtes Patentdokument | Datum der Veröffentlichung | Mitglied(er) der Patenffamilie | Datum der Veröffentlichung |
|---|---|---|---|
| US 4914157 A | 03-04-1990 | KEINE | |

EPO FORM P0461

Für nähere Einzelheiten zu diesem Anhang : siehe Amtsblatt des Europäischen Patentamts, Nr.12/82